# EUROPEAN PATENT SPECIFICATION

(11) **EP 4 421 756 B1**
(45) Date of publication and mention of the grant of the patent: **29.10.2025**
(21) Application number: 23305260.4
(22) Date of filing: 27.02.2023
(51) Int. Cl.: G06V 10/82, G06V 10/74

(54) **METHOD, DEVICE AND COMPUTER PROGRAM FOR ADAPTING AN ANN MODEL FOR PERSON RE-IDENTIFICATION ON A TARGET DOMAIN**
VERFAHREN, VORRICHTUNG UND COMPUTERPROGRAMM ZUR ANPASSUNG EINES ANN-MODELLS ZUR ERNEUTEN PERSONENIDENTIFIZIERUNG AUF EINER ZIELDOMÄNE
PROCÉDÉ, DISPOSITIF ET PROGRAMME INFORMATIQUE POUR ADAPTER UN MODÈLE AN POUR UNE RÉIDENTIFICATION DE PERSONNE SUR UN DOMAINE CIBLE

(43) Date of publication of application: 28.08.2024
(73) Proprietor: BULL SAS, 78340 Les Clayes-sous-Bois (FR)
(72) Inventor: RAMI, Hamza, 91120 Palaiseau (FR); WINCKLER, Nicolas, 38190 Villard Bonnot (FR); GIRALDO ZULUAGA, Jhony Heriberto, 91300 Massy (FR); LATHUILIÈRE, Stéphane, 91300 Massy (FR)
(74) Representative: IPAZ

(56) References cited:
- REMIGEREAU FELIX ET AL: "Knowledge Distillation for Multi-Target Domain Adaptation in Real-Time Person Re-Identification", 2022 IEEE INTERNATIONAL CONFERENCE ON IMAGE PROCESSING (ICIP), IEEE, 16 October 2022 (2022-10-16), pages 3853 - 3557, XP034292913, DOI: 10.1109/ICIP46576.2022.9897730
- MEKHAZNI DJEBRIL ET AL: "Unsupervised Domain Adaptation in the Dissimilarity Space for Person Re-identification", ARXIV.ORG, CORNELL UNIVERSITY LIBRARY, 201 OLIN LIBRARY CORNELL UNIVERSITY ITHACA, NY 14853, 23 August 2020 (2020-08-23), XP047594068
- YIN CUI ET AL: "Large Scale Fine-Grained Categorization and Domain-Specific Transfer Learning", ARXIV.ORG, CORNELL UNIVERSITY LIBRARY, 201 OLIN LIBRARY CORNELL UNIVERSITY ITHACA, NY 14853, 16 June 2018 (2018-06-16), XP080891323
- GONG BOQING ET AL: "Connecting the Dots with Landmarks: Discriminatively Learning Domain-Invariant Features for Unsupervised Domain Adaptation", PROCEEDINGS OF MACHINE LEARNING RESEARCH, 17 June 2013 (2013-06-17), XP093059168
- XIAO TING ET AL: "Iterative landmark selection and subspace alignment for unsupervised domain adaptation", JOURNAL OF ELECTRONIC IMAGING, S P I E - INTERNATIONAL SOCIETY FOR OPTICAL ENGINEERING, US, vol. 27, no. 3, 1 May 2018 (2018-05-01), pages 33037, XP060136249, ISSN: 1017-9909, [retrieved on 20180618], DOI: 10.1117/1.JEI.27.3.033037
- LIN WANG ET AL: "Knowledge Distillation and Student-Teacher Learning for Visual Intelligence: A Review and New Outlooks", ARXIV.ORG, CORNELL UNIVERSITY LIBRARY, 201 OLIN LIBRARY CORNELL UNIVERSITY ITHACA, NY 14853, 17 June 2021 (2021-06-17), XP081974709, DOI: 10.1109/TPAMI.2021.3055564

## Description

### Field of the invention

The present invention relates to a computer implemented method for adapting an artificial neural network, ANN, model, previously trained for person re-identification on images of a source domain, to a target domain. The invention also relates to a computer program and a device implementing such a method, as well as an ANN model obtained by a such a method.

The field of the invention is the field of domain adaptation for an ANN model for person re-identification.

### Background

Person re-identification, Re-ID, is the task of recognizing a person of interest across a set of images taken by a single camera or several nonoverlapping cameras. An ANN model used for person Re-ID is first trained on a training set of images, before it is used on inference images.

But, a model trained with a first dataset, also called the source domain, during a training phase performs well during an inference phase on a second dataset, also called target domain, only if both domains have the same data distribution. If not, the model has to be retrained. Such a retraining is not practical, and in some cases not even possible, as it requires collecting and annotating data from the target domain.

In the last years, unsupervised domain adaptation, UDA, has been proposed to adapt the learning of an ANN model trained on a source domain to a target domain. UDA uses both annotated source images and unannotated target images. When carried out offline, a large dataset from the target domain must be gathered before carrying out domain adaptation. This is not always possible due to data availability, but also to regulatory limitations that prohibits data storage overtime when persons are concerned.

There is also known online UDA, OUDA, that carries out domain adaptation over time, i.e. as data is received from the target domain. In other words, OUDA does not need to gather large amount of images from the target domain, and starts domain adaptation as images arrive from the target domain. But, known OUDA techniques suffer from two major drawbacks. On the one hand, catastrophic forgetting appears and the ANN model tends to forget knowledge acquired previously on the previous target data. On the other hand, domain shift appears since the ANN model accesses a small amount of data from the target domain, which possibly corresponds to a biased subset of the target domain dataset.

Further background information can be found in REMIGEREAU FELIX ET AL: "Knowledge Distillation for Multi-Target Domain Adaptation in Real-Time Person Re-Identification", 2022 IEEE INTERNATIONAL CONFERENCE ON IMAGE PROCESSING (ICIP), pages 3853-3557.

A purpose of the present invention is to overcome at least one of these drawbacks.

Another purpose of the present invention is to provide a more efficient solution for adapting an ANN model, previously trained on a source domain, to a target domain.

Another purpose of the present invention is to provide a more efficient solution for adapting an ANN model, previously trained on a source domain, to a target domain, without the need to gather and store a large amount of data from the target domain.

It is also another purpose of the present invention to provide a solution for adapting an ANN model previously trained on a source domain to a target domain, that does not need to gather and store a large amount of data from the target domain, and that is less likely to suffer from catastrophic forgetting.

### Summary of the invention

The invention makes it possible to achieve at least one of these aims by a computer implemented method for adapting an artificial neural network, ANN, model, previously trained for person re-identification on images of a source domain, to person re-identification on images of a target domain, data distribution of which differs from the one of said source domain, said method comprising several iterations of an adaptation phase comprising:
- receiving a new set of images of said target domain,
- constructing a set of images, called support set, by selecting from said source domain images similar to images in said new set, with a pre-determined similarity function,
- several iterations of a training step comprising the following steps:
   ▪determining a first cost, called rei-id cost, provided by said ANN model for person re-identification on said new set of images;
   ▪ determining a second cost, called Knowledge Distillation, KD, cost, provided by said ANN model, with respect to a teacher model, on a support set constructed during a previous iteration of the adaptation phase;
   ▪ updating, with a predetermined learning function, the weights of the ANN in order to minimize a global cost calculated as a function of at least said re-id cost and said KD cost; and
   ▪ updating the teacher model as a function of said ANN model.

The present invention proposes adapting an ANN model for person re-identification previously trained on a source domain to a target domain as images are received from the target domain. Thus, the present invention does not need to gather a large amount of data before starting domain adaptation.

Moreover, each adaptation phase uses new data received from the target domain such that it is not necessary to keep and store data previously received from the target domain, with the present invention. Thus, the present invention does not need to store a large amount of data over time for domain adaptation. This requires less storage resources and is more compliant with regulatory measures.

The present invention proposes constructing and using a set of images, called the support set, by selecting in the source domain images that are similar to each image in each new set of images from the target domain. Thus, the support set comprises source images that are similar to target images in the new set of images from the target domain. This support set will act as a memory bank approximating the distribution of previously seen images and enhancing the preservation of the previously acquired knowledge during continual learning of the ANN model on the target domain.

Moreover, the present invention further proposes use of a teacher model, that is generated and updated based on the ANN model considered as, also called in the following, the student model. This teacher model serves as a reference for calculating a knowledge distillation, KD, cost on the support set, and the KD cost is used to update the weights of the ANN model. Thus, the combined use of the support set and the teacher model limits, or even prevents, catastrophic forgetting of the ANN model during continual learning on the target domain.

The source domain and the target domain do not have the same data distribution. The data distribution may differ in that the images are taken:
- by different cameras presenting different characteristics such as different image sensors, etc.
- with different imaging settings, such as different imaging angles, different imaging distances, etc.
- in different configurations, such as in different places, with different luminosity, etc.
- etc.
More generally, the data distribution differs when images of the source domain differ visually from the images of the target domain.

The support set comprises only images from the source domain. The images of the support set are labeled.

The source domain may also be designated as source image set, or source set, in the following. Also, an image of the source domain may be called source image.

The target domain may also be designated as target image set, or target set, in the following. Also, an image of the target domain may be called target image.

The teacher model may be obtained by aggregating the weights of a trained model (also called student model) over the learning iterations. It does not require any gradient updates and can be obtained, for example, by an Exponential Moving Average (EMA) of the student model.

According to a particularly advantageous feature, the training step may also comprise a step for determining a third cost, called domain shift, DS, cost, in the feature space between:
- the features of the source images provided by the teacher model, and
- the features of the new set images provided by the ANN model;
the global cost being further calculated also as a function of said DS cost.

This step for calculating the DS cost makes it possible to limit, or to prevent, the domain shift between the source domain and the target domain, so that the method according to the invention does not suffer from the domain shift which is one of the drawbacks of the prior art domain adaptation techniques. Indeed, by determining the DS cost, it is possible to update the ANN model in order to minimize global cost depending on said DS cost, and thus prevent the domain shift.

The DS cost aims to measure the distance between data distribution of the source domain and data distribution of the target domain, and more particularly data distribution of the new set of images of the target domain.

The step for determining the DS cost may comprise the following operations:
- a feature vector is computed for each image of the source domain with the teacher model; and
- a feature vector is computed for each image of the new set of images from the target domain with the ANN model.
The DS cost may be calculated as a function of said feature vectors thus obtained.

According to a non limitative example, the DS cost may comprise, or may be, a Maximum-Mean Discrepancy, MMD, loss.

In this case, the MMD may be calculated with all feature vectors obtained with the ANN model and the teacher model, respectively on the new set of images and the source domain.

Of course, the DS cost may be another cost determined in the feature space, i.e., with the feature vectors provided by the teacher model and the ANN model, respectively for the images of the source domain and the images of the new set of images from the target domain.

The training step may be repeated as many times as necessary in order the minimize the global cost calculated as a function of the costs determined during said training step.

For example, the training step may be stopped when the global cost does not decrease during N consecutive iterations. For example, N=5.

The global cost may be a sum of the costs that are determined during the training step, i.e., the sum of the re-id cost and the KD cost, and if applicable of the DS cost.

Of course, the global cost may be calculated according to another formula taking into account the costs that are determined during the training step.

In some embodiments, the teacher model may be updated as an Exponential Moving Average of the ANN model.

Such a relationship between the ANN model and the teacher model makes it possible to monitor the evolution of the knowledge of the ANN model and better prevent catastrophic forgetting.

For example, the teacher model has the same architecture as the ANN model. Each weight/coefficient of the teacher model is updated at each training **step** as the exponential moving average of the corresponding wight/coefficient of the ANN model.

The method according to the invention may also comprise, before the first iteration of the adaptation phase, a step for initializing the teacher model.

The teacher model may be initialized according to any relation, or formula.

For example, the teacher model may be initialized such that said teacher model is identical to the ANN model, before the first iteration of the adaptation phase.

According to non limitative embodiments, the step of construction of the support set may comprise the following steps for each new image of the new set of images:
- obtaining a feature vector for said new image by the ANN model; and
- selecting, from the source domain, the image(s) the feature vector of which is similar to the feature vector of said new image.

Thus the construction of the support set is based on the similarity of the images of the source domain to the images in the new set of images of the target domain. Said differently, the construction of the support set is based on the similarity of its images to the target domain images.

For example, the similarity function may be the cosine similarity.

Of course, the similarity function used for the construction of the support set may be any other similarity function, such as the Euclidean similarity.

According to some embodiments, the step for determining the re-id cost may comprise a step for pseudo-labelling of the images of the new set of target images.

In this case, the re-id cost is determined based on said images with pseudo-labels entered to the ANN model.

The pseudo-labelling of the images of the new set of target images may be done according to any pseudo-labelling technique.

According to non limitative embodiments, the pseudo-labelling may comprise labelling of the images by clustering of said images based on the feature vector of each image, the re-id cost being determined based on said pseudo-labels of said images.

More particularly, each image of the new set of images from the target domain is entered into the ANN model. This latter provides a feature vector for said image. The feature vector of all images are used in order to build several clusters. Each image is then labeled with the name of the cluster containing the feature vector of said image. In other words, a clustering is applied in the feature space over the feature representations of the unlabeled images from the target domain. Then, each image is assigned with the identity corresponding to the cluster ID.

The re-id cost may be any cost used for training an ANN model for person re-identification.

According to non limitative embodiments, the re-id-cost may be, or may comprise, a cross entropy loss.

According to non limitative embodiments, the re-id-cost may be, or may comprise, a triplet loss.

According to non limitative embodiments, the re-id-cost may be a combination, for example a sum, of the cross entropy loss and the triplet loss.

The KD cost determination may be done according to any known technique.

In some non limitative embodiments, KD cost may be determined based on the feature vectors.

In some non limitative embodiments, KD cost may be determined based on similarity. This gives the ANN model more degrees of freedom in the construction of discriminative feature space.

According to non limitative examples, the step for determining the KD cost may comprise the following steps:
- for each image of the support set constructed during the previous iteration of the adaptation phase, determining a feature vector with the ANN model, and a feature vector with the teacher model;
- determining a first similarity matrix with the feature vectors provided by the ANN model;
- determining a second similarity matrix with the feature vectors provided by the teacher model; and
- calculating the KD cost as a function of said similarity matrices.
As indicated above, working with similarity matrices gives the ANN model more degrees of freedom in the construction of discriminative feature space.

The KD cost may be any known cost or loss.

According to non limitative embodiments, the KD cost may comprise, or may be, the Frobenius norm between the similarity matrices obtained with the ANN model and the teacher model for the images of the support set constructed during the previous iteration of the adaptation phase.

According to another aspect of the same invention, it is proposed an artificial neural network, ANN, model for person re-identification obtained by the method according to the invention.

The ANN model may be any type of artificial neural network used person re-id.

For example, the ANN model may be a Convolutional Neural Network, CNN.

For example, the ANN model may be a Deep Learning Neural Network, DLNN.

For example, the ANN may be, or may comprise, or may be based on, Resnet50, ConvNext, etc.

According to another aspect of the same invention, it is proposed a computer program comprising instructions, which when executed by a computer, cause the computer to carry out the steps of the method according to the invention.

The computer program may be in any programming language such as C, C++, JAVA, Python, etc.

The computer program may be in machine language.

The computer program may be stored, in a non-transient memory, such as a USB stick, a flash memory, a hard-disk, a processor, a programmable electronic chip, etc.

The computer program may be stored in a computerized device such as a Smartphone, a tablet, a computer, a server, etc.

According to another aspect of the same invention, it is proposed a device configured to carry out the steps of the method according to the invention.

The device may be any computerized device such as a Smartphone, a tablet, a computer, a server, a processor, etc.

The device according to the invention may execute one or several applications, or computer program(s), to carry out the steps of the method according to the invention.

The device according to the invention may be loaded with, and configured to execute, the computer program according to the invention.

### Description of the figures and embodiments

Other advantages and characteristics will become apparent on examination of the detailed description of an embodiment which is in no way limitative, and the attached figures, where:
- FIGURE 1 is a diagrammatic representation of a first non-limitative example of a method according to the invention;
- FIGURE 2 is a diagrammatic representation of another non-limitative example of a method according to the invention; and
- FIGURE 3 is a diagrammatic representation of a non-limitative example of a device according to the present invention.

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

In the FIGURES, elements common to several figures retain the same reference.

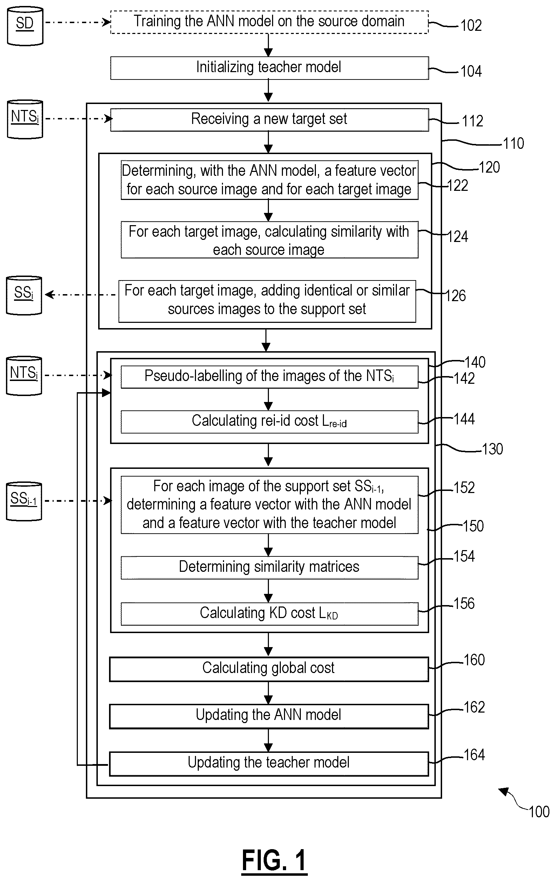

FIGURE 1 is a diagrammatic representation of a non-limitative example of a method according to the present invention.

The method 100, shown in FIGURE 1, may be used for example for adapting to a target domain, the knowledge of an ANN model for person re-identification on images previously trained on a source domain.

The method 100 may comprise an optional phase 102, during which the ANN model is trained on the source domain SD, i.e. with a set of training images from the source domain.

In other embodiments, the method 100 may not comprise step 102. Such a training phase 102 may be done before the method 100, and more generally before the method according to the invention.

The method 100 may comprise a step 104 during which a teacher model is initialized according to any known technique. For example, the teacher model may be initialized as the ANN model. In other words the teacher model may be identical to the ANN model at the end of the initializing step 104.

The method 100 comprises an adaptation phase 110 that is repeated over time for continual learning of the ANN model on the target domain. The adaptation phase 110 is repeated every time a new set of images of the target domain is received. During the adaptation phase 110 the ANN model learns for the target domain with a new set of images. In other words, during the adaptation phase 110, the knowledge of the ANN model, acquired on the source domain, is adapted to the target domain with the new set of images. The adaptation is realized in an online fashion, i.e. as new set images arrive from the target domain.

The adaptation phase 110 comprises a step 112 for receiving a new set of images from the target domain, also called the new target set. The new set of images received at the i^{th} iteration of the raining phase is noted NTSᵢ.

The adaptation phase 110 comprises a step 120 for construction a support set of images SSᵢ with images of the source domain SD. This support set SSᵢ will act as a memory bank, for the next iteration, i.e. the (i+1)^{th} iteration, of the adaptation phase 110, approximating the distribution of previously seen images and enhancing the preservation of the previously acquired knowledge. The construction of the support set SSᵢ may be carried out as follows, without loss of generality.

At a step 122 a feature vector is determined for each image of the source domain SD with the ANN model. During this step, a feature vector is also determined with the ANN model for each image of the new target set NTSi. A feature vector is obtained for an image by entering said image into the ANN model. The later then returns, in a conventional manner, an alphanumeric vector, called feature vector.

At a step 124, for each target image of the new set of target images NTSi, a similarity is calculated between said target image and each source image of the source domain SD. For example, the similarity between the target image and each source image may be the cosine distance between the feature vector of said target image and the feature vector of said source image. This step 124 is carried for each target image in the NTSi. The cosine distance is well known. Of course, instead of the cosine distance, the similarity may be determined based on another distance, such as the Euclidean distance.

Based on the similarity computed at step 124, the sources images that are identical, or similar, to each target image are selected and added to the support set SSᵢ, at a step 126. A source image is identical or similar to a target image, when the cosine distance between the feature vectors of said images is smaller than a pre-determined threshold. In another embodiment, each target image may be assigned to the closest source image in the feature space, based for example on the cosine similarity, or any other similarity. The said sources images are then selected and added to the support set SSi.

At the end of step 126 the support set SSi is constructed. It comprises images from the source domain SD. Each image of the source domain that is in the support set SSᵢ is a labelled image. The support set SSi is stored and will be used in the next iteration of the adaptation phase 110.

Of course, the last iteration of the adaptation phase 110 may not comprise step 120 for determining a support set.

The adaptation phase 110 comprises one or several iterations of a training step 130 for training the ANN model and adapting the ANN model to the target domain.

The training step 130 comprises a step 140 for calculating a re-identification cost, re-id cost, noted L_{re-id}, for the ANN model on the new set of images NTSᵢ.

The re-id cost L_{re-id} may be any known cost used for training an ANN model for person re-identification on images.

In the following, without loss of generality, the re-id cost is a combined loss comprising:
- a cross entropy loss, and
- a triplet loss.
For example, the re-id loss L_{re-id} may be a sum of these losses.

Step 140 comprises a first step 142 during which the images of the new target set NTSᵢ are pseudo-labelled according to any pseudo-labelling method. For example, the pseudo-labelling method may be a clustering method based on the feature vector determined for each target image of the new target set NTSi. The feature vector is determined for each target image during step 122. Alternatively, the feature vector for each image may be determined by entering said image into the ANN model during the step 142.

Once the images of the new set of target images NTSᵢ have been pseudo-labelled, the re-id cost L_{re-id} is determined for the new set of target images NTSᵢ, at step 144.

The training step 130 also comprises a step 150 for determining a knowledge distillation, KD, cost, noted L_{KD}, with the support set SSᵢ₋₁ constructed during the previous iteration of the adaptation phase 110.

The KD cost L_{KD} may be any known cost.

In the following, without loss of generality, the KD cost L_{KD} is formulated as the Frobenius norm between similarity matrices calculated on the support set.

In the example shown in FIGURE 1, step 150 comprises a step 152 computing, for each image in the support set SSᵢ₋₁ constructed during the previous iteration of the adaptation phase 110:
- a feature vector with the ANN model, and
- a feature vector with the teacher model.
The feature vector for an image is obtained with the ANN model, respectively the teacher model, by entering said image into said model.

The KD loss determining step 140 comprises, after step 152, a step 154 determining, for the support set SSᵢ₋₁:
- a first similarity matrix with the feature vectors returned by the ANN model, and
- a second similarity matrix with the feature vectors returned with the teacher model.
Thus, at step 154, two similarity vectors are obtained for the support set SSᵢ₋₁: one with the ANN model and the other with the teacher model.

The KD loss L_{KD} is calculated at a step 156 as the Frobenius norm between the similarity matrices obtained for the support set SSᵢ₋₁, at step 154.

Of course, the first iteration of the adaptation phase 110 does not comprise step 150.

The training step 130 may further comprise a step 160 for calculating a global cost L_{G} as a function of the re-id cost L_{re-id} and the KD cost L_{KD}. For example, the global cost may be the sum of the re-id cost L_{re-id} and the KD cost L_{KD} such that L_{G}=L_{re-id}+L_{KD}.

The training step 130 comprises a step 162 for updating the ANN model. More particularly, the weights of the ANN model are updated in order to minimize the global cost L_{G}.

The updating of the ANN model may be done according to any learning algorithm, such as stochastic gradient descent.

The training step 130 comprises a step 164 updating the teacher model as a function of the updated ANN model.

The teacher model may be updated according to any relation taking into account the ANN model.

According to a non limitative example, the teacher model may be updated as the exponential moving average of the ANN model.

Of course, at the last iteration of the training step 130, during the last iteration of the adaptation phase 110, step 154 may not be realized.

The training step 130 is repeated one or several times in order to minimize the global cost, or each of the costs calculated during said training step.

For example, the training step 130 may be repeated until said global cost doesn't decrease, for example for N consecutive iterations of the training step. For example, N=5.

The adaptation phase 110 may be repeated several times, with a new set of target images. Adaptation phase 110 may be stopped when the performance of the ANN is satisfactory.

Alternatively, the adaptation phase 110 may never be stopped so that the continual learning of the ANN continues while the ANN is used in the target domain.

In the example shown in FIGURE 1, during the training step 130, steps 140 and 150 are carried out in this order. Of course, in other embodiments, steps 140 and 150 may be carried out in another order, or at the same time.

The method 100 shown in FIGURE 1 prevents catastrophic forgetting during the continual learning of the ANN model on the target domain. But, there might be a domain shift between the source domain and the target domain due to a change in distribution of data between the source domain and the target domain. Such a domain shift may be even worse especially when the ANN model has access to only a small and possibility biased subset of data in the target domain, i.e. when the new set of target images NTSᵢ is a small and biased set of images.

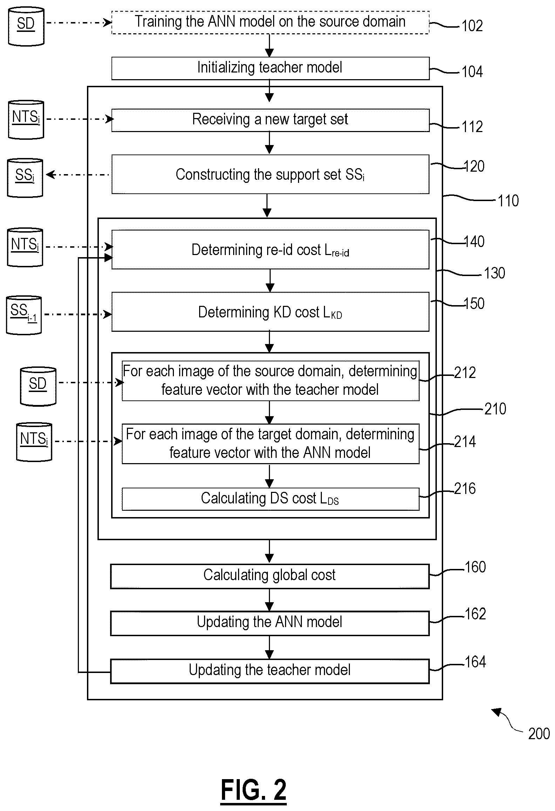

FIGURE 2 is a diagrammatic representation of another non-limitative example of a method according to the present invention.

The method 200, shown in FIGURE 1, comprises all the steps of the method 100 of FIGURE 1.

The method 200 further comprises steps for limiting, or preventing, domain shift by enhancing the support set construction.

In this aim, as shown in FIGURE 2, the training step 130 of the method 200 comprises after the KD lost L_{KD} determination step 150, a step 210 for determining a third cost, called domain shift, DS, cost, and noted L_{DS}. The DS cost L_{DS} is calculated with the source domain SD and the new set of target images NTSᵢ. The DS cost L_{DS} aims to reduce the distance between data distribution of the source domain SD and data distribution of the target domain.

The DS cost L_{DS} may be calculated according to any known technique.

The DS cost L_{DS} may be any known cost.

In the following, without loss of generality, the DS cost L_{DS} is formulated as Maximum-Mean Discrepancy, MMD, loss in the feature space.

In the example shown in FIGURE 2, step 210 for determining L_{DS} comprises a step 212 for determining a feature vector for each image of the source domain SD, with the teacher model. If those feature vectors have been already calculated for the current iteration of the training step 130, this step 212 may be ignored.

Step 210 comprises a step 214 for determining a feature vector for each image of the new target set NTSᵢ, with the ANN model. Again, if those feature vectors have already been calculated for the current iteration of the training step 130, this step 214 may be ignored.

Step 210 comprises a step 216 calculating the MMD loss on all feature vectors obtained during steps 212 and 214. The MMD loss is the DS loss L_{DS}.

In the method 200, the step 160 calculates the global cost L_{G} as a function of the re-id cost L_{re-id}, KD cost L_{KD}, and the DS cost L_{DS}. More particularly, the global cost L_{G} may be a sum of these costs, such that L_{G}=L_{re-id}+L_{KD}+L_{DS}.

Thus, the method 200 prevents catastrophic forgetting, and domain shift, during continual learning of the ANN model on the target domain.

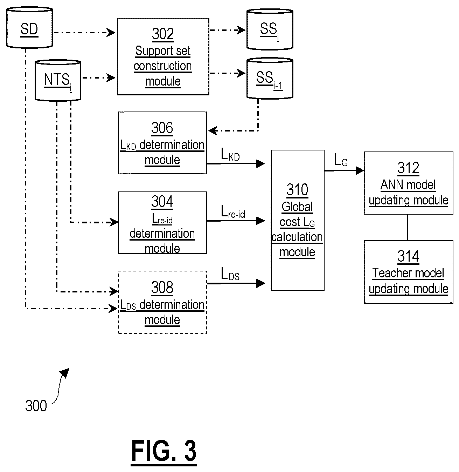

FIGURE 3 is a non-limitative example of a device according to the invention.

The device 300, shown in FIGURE 3, may be used for adapting an ANN model, previously trained for person re-identification on images of a source domain, for person re-identification on images of a target domain, the data distribution of which is different from the one of the source domain.

The device 300 may be used to carry out a method according to the invention, and more particularly the method 100 of FIGURE 1, or the method of FIGURE 2.

The device 300 comprises a module 302 for constructing the support set SSi as a function of a new set NTSᵢ of images from the target domain. More particularly, the module 302 may be configured to carry out step 120 of the methods 100 and 200.

The device 300 comprises a module 304 for determining the re-id cost L_{re-id} on the new set of images of the target domain NTSᵢ. More particularly, the module 304 may be configured to carry out step 140 of the methods 100 and 200.

The device 300 comprises a module 306 for determining the KD cost L_{KD} on the support set SSᵢ₋₁ determined during the previous iteration of the adaptation phase. More particularly, the module 306 may be configured to carry out step 150 of the methods 100 and 200.

The device 300 may optionally comprise a module 308 for determining the DS cost L_{DS} with the images of the source domain SD and the images of the new set NTSᵢ of images from the target domain. More particularly, the module 308 may be configured to carry out step 210 of the method 200.

The device 300 comprises a module 310 for calculating a global cost L_{G} with the costs determined by the modules 304-308. More particularly, the module 310 may be configured to carry out step 160 of the methods 100 and 200.

The device 300 comprises a module 312 for updating the ANN model as function of the global cost L_{G}. More particularly, the module 312 may be configured to carry out step 162 of the methods 100 and 200.

The device 300 comprises a module 314 for updating the teacher model as function of the ANN model, after the ANN model is updated. More particularly, the module 314 may be configured to carry out step 164 of the methods 100 and 200. The module 314 may also be configured for initializing the teacher model, at the beginning of the training of the ANN on the target domain according to the invention. More particularly, the module 314 may be configured to carry out step 104 of the methods 100 and 200.

At least one of the modules of the device 300 described with reference to FIGURE 3, and more generally at least one of the modules of the device according to the invention, may be an independent module separated from the other modules.

At least two of the modules may be integrated into a common module.

At least one of the modules may be a software, such as a computer program, an application, etc.

At least one of the modules may be a hardware component, such as a processor, a chip, a smartphone, a tablet, a computer, a server, etc.

At least one of the modules may be a combination of at least one software and at least one hardware component.

Of course, the invention is not limited to the examples detailed above.

## Claims

1. A computer implemented method (100;200) for adapting an ANN model, previously trained for person re-identification on images of a source domain (SD), to person re-identification on images of a target domain, data distribution of which differs from the one of said source domain (SD), said method (100;200) comprising several iterations of an adaptation phase (110) comprising:
- receiving (112) a new set of images (NTSᵢ) of said target domain,
- constructing (120) a set of images (SSᵢ), called support set, by selecting from said source domain (SD) images similar to images in said new set (NTSᵢ), with a pre-determined similarity function,
- several iterations of a training step (130) comprising the following steps:
▪ determining (140) a first cost, called rei-id cost, provided by said ANN model for person re-identification on said new set of images (NTSᵢ);
▪ determining (150) a second cost, called Knowledge Distillation, KD, cost, provided by said ANN model, with respect to a teacher model, on a support set (SSᵢ₋₁) constructed during a previous iteration of the adaptation phase,
▪ updating (162), with a predetermined learning function, the weights of the ANN in order to minimize a global cost calculated as a function of at least said re-id cost and said KD costs;
▪ updating (164) the teacher model as a function of said ANN model.

2. The method (200) according to anyone of the preceding claims, wherein the training step (130) also comprises a step (210) for determining a third cost, called domain shift, DS, cost, in the feature space between:
- the features of the source images (SD) provided by the teacher model, and
- the features of the new set images (NTSᵢ) provided by the ANN model;
the global cost being further calculated also as a function of said DS cost.

3. The method (200) according to f the preceding claim, wherein the DS cost comprises, or is, a Maximum-Mean Discrepancy.

4. The method (100;200) according to anyone of the preceding claims, wherein the teacher model is updated as an Exponential Moving Average of the ANN model.

5. The method (100;200) according to anyone of the preceding claims, also comprising, before the first iteration of the adaptation phase (110), a step (104) for initializing the teacher model.

6. The method (100;200) according to anyone of the preceding claims, wherein the step (120) of construction of the support set (SSᵢ) comprises the following steps for each new image of the new set of images (NTSᵢ):
- obtaining (122) a feature vector for said new image by the ANN model; and
- selecting (124),126), from the source domain, the image(s) the feature vector of which is similar to the feature vector of said new image.

7. The method (100;200) according to anyone of the preceding claims, wherein the pre-determined similarity function is the cosine similarity.

8. The method (100;200) according to anyone of the preceding claims, wherein the step (140) for determining the re-id cost comprises a step (142) for pseudo-labelling of the images of the new set of target images (NTSᵢ).

9. The method (100;200) according to the preceding claims, wherein the pseudo-labelling of the images of the new set of target images (NTSᵢ) comprises labelling of the images by clustering of said images based on the feature vector of each image, the re-id cost being determined based on said pseudo-labels of said images.

10. The method (100;200) according to anyone of the preceding claims, wherein the re-id-cost comprises:
- a cross entropy loss, and/or
- a triplet loss.

11. The method (100;200) according to anyone of the preceding claims, wherein the step (150) for determining the KD cost comprises:
- for each image of the support set (SSᵢ₋₁) constructed during the previous iteration of the adaptation phase (110), determining (152) a feature vector with the ANN model, and a feature vector with the teacher model;
- determining (154) a first similarity matrix with the feature vectors provided by the ANN model;
- determining (154) a second similarity matrix the feature vectors provided by the teacher model; and
- calculating (156) the KD cost as a function of said similarity matrices.

12. The method (100;200) according to preceding claim, wherein the KD cost comprises, or is, the Frobenius norm between the similarity matrices obtained with the ANN model and the teacher model for the images of the support set (SSᵢ₋₁) constructed during the previous iteration of the adaptation phase (110).

13. Computer program comprising instructions which, when executed by a computer, cause the computer to carry out the steps of the method (100;200) according to any one of the claims 1 to 12.

14. Device (300) comprising means configured to carry out the steps of the method (100;200) according to any one of the claims 1 to 12.

## Patentansprüche

1. Computerimplementiertes Verfahren (100; 200) zum Anpassen eines ANN-Modells, das zuvor für die erneute Personenidentifizierung auf Bildern einer Quelldomäne (SD) trainiert wurde, an die erneute Personenidentifizierung auf Bildern einer Zieldomäne, deren Datenverteilung sich von der der Quelldomäne (SD) unterscheidet, wobei das Verfahren (100; 200) mehrere Iterationen einer Anpassungsphase (110) umfasst, die Folgendes umfasst:
- Empfangen (112) eines neuen Satzes von Bildern (NTSᵢ) der Zieldomäne,
- Erstellen (120) eines Satzes von Bildern (SSᵢ), bezeichnet als Unterstützungssatz, durch Auswählen von Bildern aus der Quelldomäne (SD), die Bildern im neuen Satz (NTSᵢ) ähnlich sind, mit einer vorbestimmten Ähnlichkeitsfunktion,
- mehrere Iterationen eines Trainingsschritts (130), der die folgenden Schritte umfasst:
▪ Bestimmen (140) von ersten Kosten, bezeichnet als re-id-Kosten, die von dem ANN-Modell für die erneute Personenidentifizierung auf dem neuen Satz von Bildern (NTSᵢ) bereitgestellt wird;
▪ Bestimmen (150) von zweiten Kosten, bezeichnet als Knowledge Distillation (KD)-Kosten, bereitgestellt durch das ANN-Modell, in Bezug auf ein Lehrermodell, auf einem Unterstützungssatz (SSᵢ₋₁), der während einer vorherigen Iteration der Anpassungsphase erstellt wurde,
▪ Aktualisieren (162) der Gewichte des ANN mit einer vorbestimmten Lernfunktion, um globale Kosten zu minimieren, die als eine Funktion von mindestens den re-ID-Kosten und den KD-Kosten berechnet werden;
▪ Aktualisieren (164) des Lehrermodells als eine Funktion des ANN-Modells.

2. Verfahren (200) nach einem der vorhergehenden Ansprüche, wobei der Trainingsschritt (130) auch einen Schritt (210) umfasst zum Bestimmen von dritten Kosten, bezeichnet als Domänenverschiebungs(DS)-Kosten, im Merkmalsraum zwischen:
- den Merkmalen der vom Lehrermodell bereitgestellten Quellbilder (SD) und
- den Merkmalen der neuen Bildersätze (NTSᵢ), die vom ANN-Modell bereitgestellt werden;
wobei die Gesamtkosten ferner auch als Funktion der genannten DS-Kosten berechnet werden.

3. Verfahren (200) nach dem vorhergehenden Anspruch, wobei die DS-Kosten eine maximale mittlere Diskrepanz umfassen oder darstellen.

4. Verfahren (100; 200) nach einem der vorhergehenden Ansprüche, wobei das Lehrermodell als exponentieller gleitender Durchschnitt des ANN-Modells aktualisiert wird.

5. Verfahren (100; 200) nach einem der vorhergehenden Ansprüche, das außerdem vor der ersten Iteration der Anpassungsphase (110) einen Schritt (104) zum Initialisieren des Lehrermodells umfasst.

6. Verfahren (100;200) nach einem der vorhergehenden Ansprüche, wobei der Schritt (120) des Erstellens des Unterstützungssatzes (SSᵢ) die folgenden Schritte für jedes neue Bild des neuen Bildsatzes (NTSᵢ) umfasst:
- Erhalten (122) eines Merkmalsvektors für das neue Bild durch das ANN-Modell; und
- Auswählen (124, 126) des Bildes bzw. der Bilder aus der Quelldomäne, dessen Merkmalsvektor dem Merkmalsvektor des neuen Bildes ähnlich ist.

7. Verfahren (100; 200) nach einem der vorhergehenden Ansprüche, wobei die vorbestimmte Ähnlichkeitsfunktion die Kosinusähnlichkeit ist.

8. Verfahren (100;200) nach einem der vorhergehenden Ansprüche, wobei der Schritt (140) zum Bestimmen der re-id-Kosten einen Schritt (142) zum Pseudo-Labeln der Bilder des neuen Satzes von Zielbildern (NTSᵢ) umfasst.

9. Verfahren (100;200) nach den vorhergehenden Ansprüchen, wobei das Pseudo-Labeln der Bilder des neuen Satzes von Zielbildern (NTSᵢ) ein Labeln der Bilder durch Clustern der Bilder basierend auf dem Merkmalsvektor jedes Bildes umfasst, wobei die re-id-Kosten basierend auf den Pseudo-Labeln der Bilder bestimmt werden.

10. Verfahren (100;200) nach einem der vorhergehenden Ansprüche, wobei die re-id-Kosten umfassen:
- einen Kreuzentropieverlust und/oder
- einen Triplett-Verlust.

11. Verfahren (100; 200) nach einem der vorhergehenden Ansprüche, wobei der Schritt (150) zum Bestimmen der KD-Kosten umfasst:
- für jedes Bild des Unterstützungssatzes (SSᵢ₋₁), das während der vorherigen Iteration der Anpassungsphase (110) erstellt wurde, Bestimmen (152) eines Merkmalsvektors mit dem ANN-Modell und eines Merkmalsvektors mit dem Lehrermodell;
- Bestimmen (154) einer ersten Ähnlichkeitsmatrix mit den vom ANN-Modell bereitgestellten Merkmalsvektoren;
- Bestimmen (154) einer zweiten Ähnlichkeitsmatrix der vom Lehrermodell bereitgestellten Merkmalsvektoren; und
- Berechnen (156) der KD-Kosten als eine Funktion der Ähnlichkeitsmatrizen.

12. Verfahren (100;200) nach dem vorhergehenden Anspruch, wobei die KD-Kosten die Frobenius-Norm zwischen den mit dem ANN-Modell und dem LehrerModell erhaltenen Ähnlichkeitsmatrizen für die Bilder des während der vorherigen Iteration der Anpassungsphase (110) erstellten Unterstützungssatzes (SSᵢ₋₁) umfassen oder darstellen.

13. Computerprogramm umfassend Anweisungen, die, wenn sie von einem Computer ausgeführt werden, den Computer veranlassen, die Schritte des Verfahrens (100; 200) gemäß einem der Ansprüche 1 bis 12 auszuführen.

14. Vorrichtung (300), umfassend Mittel, die konfiguriert sind, um die Schritte des Verfahrens (100;200) nach einem der Ansprüche 1 bis 12 auszuführen.

## Revendications

1. Procédé mis en œuvre par ordinateur (100 ;200) destiné à adapter un modèle ANN, préalablement entraîné pour la réidentification de personnes sur des images d'un domaine source (SD), à la réidentification de personnes sur des images d'un domaine cible, dont la distribution des données diffère de celle dudit domaine source (SD), ledit procédé (100 ;200) comprenant plusieurs itérations d'une phase d'adaptation (110) comprenant :
- la réception (112) d'un nouvel ensemble d'images (NTSᵢ) dudit domaine cible,
- la construction (120) d'un ensemble d'images (SSᵢ), appelé ensemble de support, en sélectionnant dans le domaine source (SD) des images similaires aux images du nouvel ensemble (NTSᵢ), avec une fonction de similarité prédéterminée,
- plusieurs itérations d'une étape d'apprentissage (130) comprenant les étapes suivantes :
▪ la détermination (140) d'un premier coût, appelé coût de réidentification, fourni par ledit modèle ANN pour la réidentification de personne sur ledit nouvel ensemble d'images (NTSᵢ) ;
▪ la détermination (150) d'un second coût, appelé coût de distillation des connaissances, KD, fourni par ledit modèle ANN, par rapport à un modèle enseignant, sur un ensemble de support (SSᵢ₋₁) construit au cours d'une itération précédente de la phase d'adaptation,
▪ la mise à jour (162), à l'aide d'une fonction d'apprentissage prédéterminée, les poids de l'ANN afin de minimiser un coût global calculé en fonction d'au moins ledit coût de réidentification et lesdits coûts KD ;
▪ la mise à jour (164) du modèle enseignant en fonction dudit modèle ANN.

2. Procédé (200) selon l'une quelconque des revendications précédentes, dans lequel l'étape d'apprentissage (130) comprend également une étape (210) pour déterminer un troisième coût, appelé coût de déplacement de domaine, DS, dans l'espace de caractéristiques entre :
- les caractéristiques des images sources (SD) fournies par le modèle enseignant, et
- les caractéristiques du nouvel ensemble d'images (NTSᵢ) fournies par le modèle ANN ;
le coût global étant également calculé en fonction dudit coût DS.

3. Procédé (200) selon la revendication précédente, dans lequel le coût DS comprend ou est un écart maximum-moyen.

4. Procédé (100 ;200) selon l'une quelconque des revendications précédentes, dans lequel le modèle enseignant est mis à jour sous la forme d'une moyenne mobile exponentielle du modèle ANN.

5. Procédé (100 ;200) selon l'une quelconque des revendications précédentes, comprenant également, avant la première itération de la phase d'adaptation (110), une étape (104) d'initialisation du modèle enseignant.

6. Procédé (100 ;200) selon l'une quelconque des revendications précédentes, dans lequel l'étape (120) de construction de l'ensemble de support (SSᵢ) comprend les étapes suivantes pour chaque nouvelle image du nouvel ensemble d'images (NTSᵢ) :
- l'obtention (122) d'un vecteur de caractéristiques pour ladite nouvelle image par le modèle ANN ; et
- la sélection (124, 126), dans le domaine source, de la ou des images dont le vecteur caractéristique est similaire au vecteur caractéristique de ladite nouvelle image.

7. Procédé (100 ;200) selon l'une quelconque des revendications précédentes, dans lequel la fonction de similarité prédéterminée est la similarité cosinusoïdale.

8. Procédé (100 ;200) selon l'une quelconque des revendications précédentes, dans lequel l'étape (140) de détermination du coût de réidentification comprend une étape (142) de pseudo-étiquetage des images du nouvel ensemble d'images cibles (NTSᵢ).

9. Procédé (100 ;200) selon les revendications précédentes, dans lequel le pseudo-étiquetage des images du nouvel ensemble d'images cibles (NTSᵢ) comprend l'étiquetage des images par regroupement desdites images sur la base du vecteur de caractéristiques de chaque image, le coût de réidentification étant déterminé sur la base des pseudo-étiquettes desdites images.

10. Procédé (100 ;200) selon l'une quelconque des revendications précédentes, dans lequel le coût de réidentification comprend :
- une perte d'entropie croisée, et/ou
- une perte de triplets.

11. Procédé (100 ;200) selon l'une quelconque des revendications précédentes, dans lequel l'étape (150) de détermination du coût du KD comprend :
- pour chaque image de l'ensemble de support (SSᵢ₋₁) construit au cours de l'itération précédente de la phase d'adaptation (110), la détermination (152) d'un vecteur de caractéristiques avec le modèle ANN et d'un vecteur de caractéristiques avec le modèle enseignant ;
- la détermination (154) d'une première matrice de similarité avec les vecteurs de caractéristiques fournis par le modèle ANN ;
- la détermination (154) d'une seconde matrice de similarité entre les vecteurs de caractéristiques fournis par le modèle enseignant ; et
- le calcul (156) du coût KD en fonction desdites matrices de similarité.

12. Procédé (100 ;200) selon la revendication précédente, dans lequel le coût KD comprend, ou est, la norme de Frobenius entre les matrices de similarité obtenues avec le modèle ANN et le modèle enseignant pour les images de l'ensemble de support (SSᵢ₋₁) construit au cours de l'itération précédente de la phase d'adaptation (110).

13. Programme d'ordinateur comprenant des instructions qui, lorsqu'elles sont exécutées par un ordinateur, amènent ce dernier à réaliser les étapes du procédé (100 ;200) selon l'une quelconque des revendications 1 à 12.

14. Dispositif (300) comprenant des moyens configurés pour réaliser les étapes du procédé (100 ;200) selon l'une quelconque des revendications 1 à 12.
